# EUROPEAN PATENT APPLICATION

(11) **EP 1 031 397 A1**
(43) Date of publication of application: **30.08.2000**
(21) Application number: 99830093.3
(22) Date of filing: 23.02.1999
(51) Int. Cl.: B23K 26/08, B23K 37/047

(54) **An installation for working sheet metal**

(71) Applicant: RAINER S.r.l., I-40012 Calderara di Reno (Bologna) (IT)
(72) Inventor: Raimondi, Stefano, 40133 Bologna (IT)
(74) Representative: Cerbaro, Elena, Dr.

(57) **Abstract**

The installation includes a machine tool (3) with a laser work unit (57) and an assembly (4) for storing a plurality of pallets (7) each holding a metal sheet (2). The machine (3) includes a work frame (11) with at least two first shelves (12) arranged one above the other each for housing a respective pallet (7). The assembly (4) includes a store (5) having a plurality of second shelves (6), one above the other, each housing a pallet (7) and a device (13) for transferring the pallets (7) from the store (5) to the work frame (11) and back. The work unit (57) first carries out the work on the sheet (2) in the pallet (7) housed in the highest first shelf (12) while the device (13) transfers a second pallet (7) to the lower first shelf (12) and then, once the first pallet (7) has been removed from the work frame (11) carries out the work on the sheet (2) held by the second pallet (7).

## Description

The present invention relates to an installation for working sheet metal with laser technology.

It is known that prior art plants for working sheet metal essentially comprise a store of pallets, each containing a metal sheet, a work surface, a device operable to collect one pallet at a time from the store and transfer it to the work surface, and a laser work unit for working the sheet on the work surface. The aforesaid device is also operable to retrieve the pallet from the work surface, on completion of the work cycle, and to return it to the store.

The main disadvantage of an installation as described above consists in the lengthy times required to process the sheets; these times are due to the fact that while the sheets are being transferred from the store to the work surface and back, the work unit remains idle.

The object of the present invention is to provide an installation for working sheet metal which is free of the drawback outlined above.

This object is achieved, according to the present invention, by providing an installation for working sheet metal which includes a machine tool with a laser work unit and an assembly for storing a plurality of pallets, each holding a sheet, characterised in that the said machine includes a work frame with at least two first shelves arranged one above the other, each for supporting a respective said pallet, and in that the said assembly includes a first store with a plurality of second shelves arranged one above the other, each for housing a said pallet, and a first device for transferring the said pallets from the said first store to the said work frame and back; the said work unit being operable first to execute the work on the said sheet supported on a said pallet housed on the said upper first shelf, while the said first device transfers a second pallet to the said lower first shelf, and then to carry out the work on the said sheet carried by the second pallet once the said first pallet has been removed from the said work frame.

The invention will now be described with reference to the appended drawings, which illustrate one embodiment by way of non-limitative example, in which:
Figure 1 is a plan view of an installation constructed according to the principles of this invention;
Figure 2 is a front view, with portions removed, of the plant of Figure 1;
Figure 3 is a perspective view of a sheet-bearing pallet;
Figure 4 is a view on an enlarged scale of a detail of the pallet of Figure 3;
Figure 5 is a view on an enlarged scale of a detail of the plant of Figure 1; and
Figure 6 is a view of a transmission means of the plant of Figure 1.

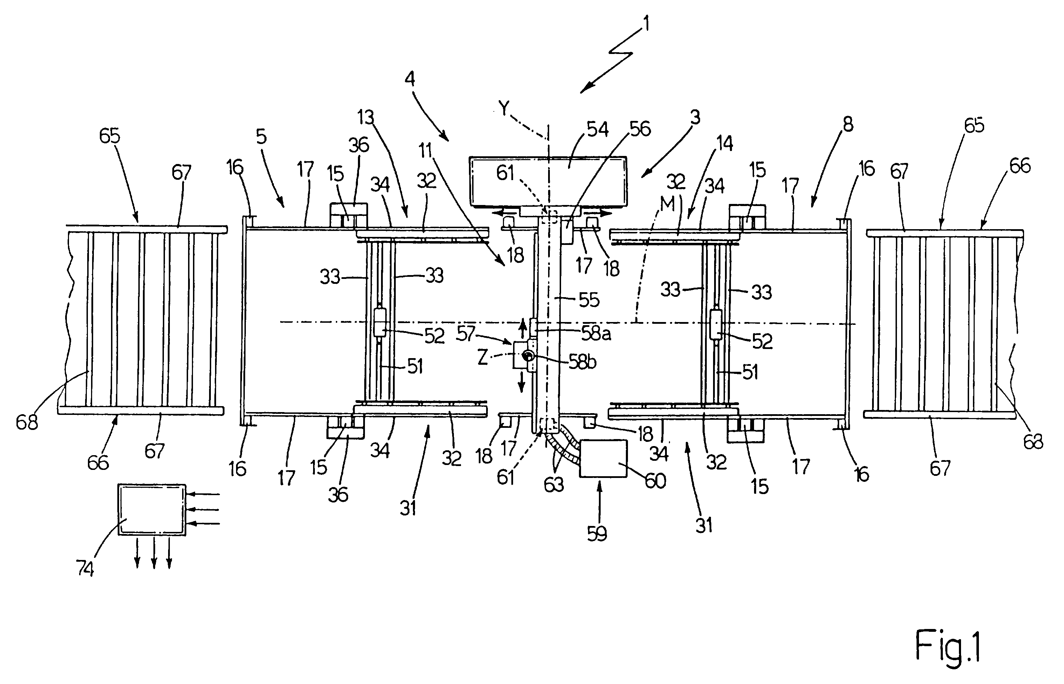

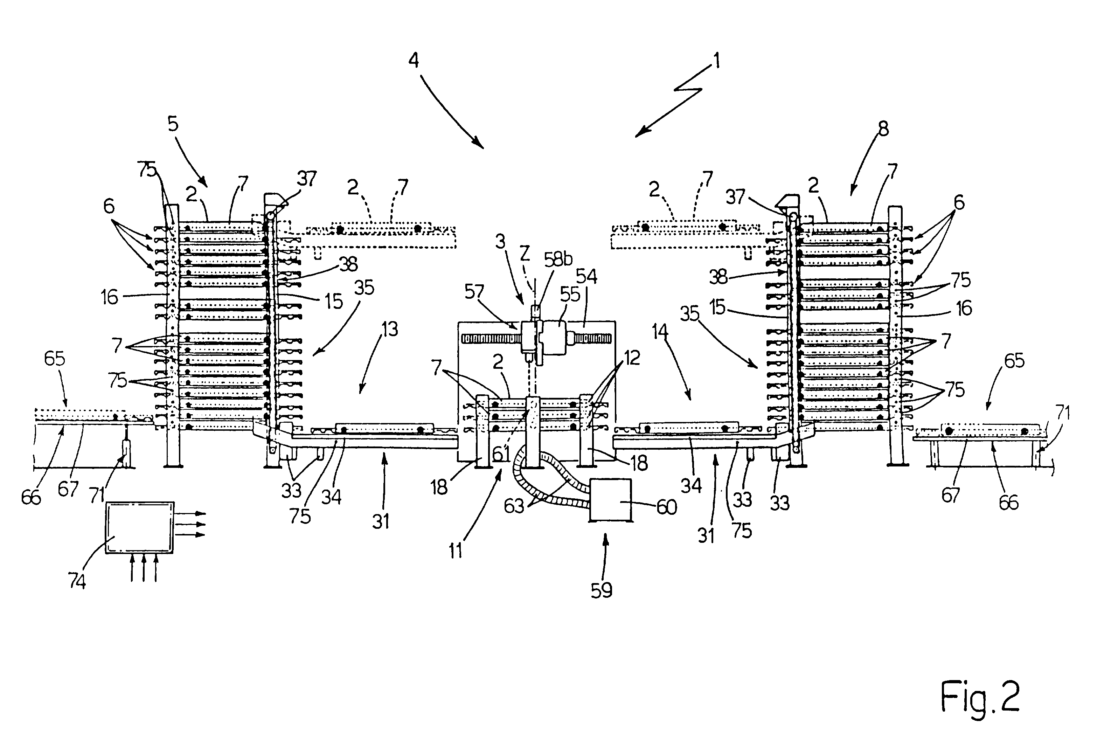

With reference to Figures 1 and 2, an installation for working metal sheet 2 is generally indicated 1 and includes a laser unit 3 and an assembly 4 for storing the sheets 2. The assembly 4 includes a first store 5, of a vertical-stacking type with a plurality of shelves 6 one above the other. Pallets 7 are housed on the shelves 6, each carrying a metal sheet 2. The assembly 4 also includes a second store 8, exactly like the store 5 and facing it.

With reference to Figures 1 and 2, the laser unit is carried by a working frame 11 similar to the stores 5 and 8. The frame 11, positioned along a horizontal axis M between the two stores 5 and 8, is of vertical construction but is not high, comprising only three shelves 12 on which to place respective pallets 7. Finally, the assembly 4 includes a device 13 for transferring the pallets 7 along the axis M from the store 5 to the frame 11 and back and a device 14 (similar to the device 13) for transferring the pallets 7 along the axis M from the store 8 to the frame 11 and back.

With reference to Figures 1 and 2, the stores 5 and 8 include four vertical members: those indicated 15 face the frame 11 and those indicated 16 face in the opposite direction. Each shelf 6 is constituted by two horizontal rails 17, parallel to the axis M and supported by the vertical members 16 and 16. In particular, each shelf 6 has a first rail 17 supported by a first vertical member 15 and a first vertical member 16, and a second rail 17 supported by a second vertical member 15 and a second vertical member 16. The frame 11 includes four upright members 18, two aligned with the first vertical member 15 and the first vertical member 16 of the two stores 5 and 8, and two aligned with the second vertical member 15 and the second vertical member 16 of the stores 5 and 8. The shelves 12 of the frame 11 are similar to the shelves 6 of the stores 5 and 8 since they are also constituted by two horizontal rail 17 supported by the uprights 18 and aligned with the rail 17 of the stores 5 and 8.

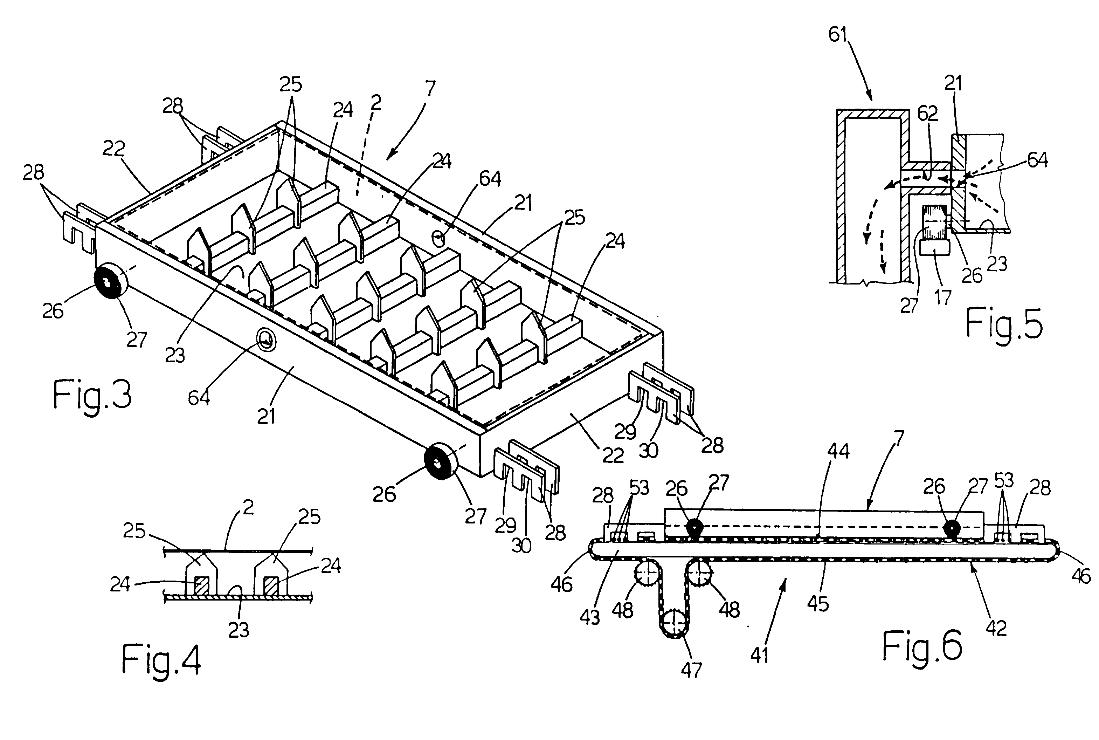

With reference to Figures 3, 4 and 5, each pallet 7 is box-shaped and has four sides lying in respective vertical planes and arranged in parallel pairs; two parallel sides 22 are lateral and two parallel sides 22 correspond to the front or back, depending on which store houses the said pallet 7. In addition, the pallet 7 includes a base 23 and a plurality of horizontal railss 24 connecting the sides 21. The rail 24 each support a plurality of bodies 25 which end in pointed tops. The sheet 2 rests on the points of the bodies 25 forming a lid to the pallet 7; the points of the bodies 25 define a horizontal plane substantially at the same height as the upper edges of the sides 21 and 22. Two horizontal rods 26 protrude from the outer face of each side 21 respectively, on each of which a wheel 27 is freely rotatable. Each pallet 7 rests on its wheels 27 on the rail 17 of a respective shelf 6 or 12. It is clear from the shape of the stores 5 and 8 and the pallets 7, as described above, that the said pallets 7 can enter and leave the stores 5 and 8 either at the front or the back of the latter and can slide on the shelves 6 or 2.

With reference to Figures 3, 4 and 5, two pairs of parallel projections 28 extend from each side 22 parallel to the axis M. The projections 28 lie in respective vertical planes and each have two notches 29 and 30 along their lower edge; the notch 29 being nearest the side 22. Along each side 22, the notches 29 and the notches 30 in both pairs of projections 28 are respectively aligned. In addition,the projections 28 extend beyond the space enclosed by the uprights 15 and 16 and, in particular, the notch 29 in the projection 28 extending from the front side 22 are outside the said space delimited by the uprights 15.

With reference to Figures 1 and 2, the device 13 has a frame 31 for supporting a pallet 7. The device includes two horizontal bars 32, parallel to each other and to the axis M; the distance between the bars 32 being less than that between the rails 17 of the store 5. The two bars 32 are fixed to each other by two horizontal connecting members 33. In addition, each bar 32 carries on its outer surface a rail 34 aligned with a corresponding rail 17. The device 13 also includes a system 35 for moving the frame 31 along a vertical axis in order to take the said frame 31 from a first load/unload position in which the frame 31 is at the same level as one of the shelves 6 and a second load/unload position in which the frame 31 is at the same level as one of the shelves 12. The system 35 includes two U-shaped bodies 36, each fitted to a respective vertical member 15 which acts as guide during movement of the corresponding body 36, a motor 37 and a chain mechanism 38 operable to transmit drive from the motor 37 to the bodies 36; the frame 31 is securely fixed to the bodies 36. It should be emphasized that the bars 32 are of sufficient length to cover the distance between the vertical members 15 of the store 5 and the nearest vertical members 18 of the frame 11; in particular, a first axial end of the bars 32 is substantially adjacent the corresponding member 15 and the second axial end of the bar 32 is substantially adjacent the said corresponding upright 18.

With reference to Figures 1 and 6, the device 13 finally includes a system 41 for collecting a pallet 7 from the store 5 and operable to transfer the said pallet 7 first to the frame 31 and then to the work frame 11. The system 41 is also operable to collect the pallet 7 from the frame 11 and return it to the store 5. For each bar 32, the system 41 includes a chain 42 supported by a plate 43 carried by the bar 32 inside the space delimited between the bars 32; the plate 43 lies in a vertical plane. The chain 42 has a straight upper portion 44 parallel to the axis M and sliding on an edge of the plate 43, a lower portion 45 which includes a straight portion which slides along the plate 43 and two portions 46 connecting the portions 44 and 45 and sliding on respective axial ends of the plate 43, this end being rounded. The first connecting portion is near the said first end of the bar 32 and the second portion 46 is near the said second end of the bar 32; the portion 44 is substantially the same length as the bar 32.

With reference to Figure 6, a part of the lower portion 45 is U shaped as it meshes with a toothed wheel 47 and two idlers 48 are applied to this portion. The wheel 47 corresponding to one bar 32 is fixed for rotation with the wheel 47 of the second bar 32 of the device 13, by means of a transmission shaft 51 which is rotated by an electric motor 52. In particular, the wheels 47 are keyed on the shaft 51, the longitudinal axis of which is horizontal and orthogonal to the axis M.

Each chain 42 supports two assemblies, each having three horizontal pins 53 extending from either side of the chain 42 itself; a first assembly of three pins 53 is arranged along a first portion of the chain 42 and a second assembly of three pins is arranged along a second portion of the chain 42. The two aforesaid portions of the chain 42 are spaced by a distance equal to the distance between the slot 29 of the front side 22 and the slot 30 of the rear side 22 of the same pallet 7. The width of the chain 42 is less than the width of the space enclosed between a pair of projections 28, while the three pins 53 of each assembly are longer than the distance between the two projections 28 in a pair. In addition, the distance between the first and the last pins 53 of a same assembly is smaller than the length of the slots 29 and 30. The device 14 is entirely similar to the device 13 and its parts are therefore indicated by the same numerals used to indicate the components of the device 13.

With reference to Figures 1 and 2, the machine 3 includes:
a base 54 arranged beside the frame 11;
a horizontal cross member 55 extending from the base 54 along a horizontal axis Y orthogonal to the axis M, the cross member 55 being at a higher level than the frame 11;
means 56 for moving the cross member 55 along the axis M;
a laser work unit 57 carried by the cross member 55;
means 58a for moving the unit 57 along the axis Y; and
means 58b for moving the unit 57 along a vertical axis Z.

With reference to Figures 1, 2 and 5, the installation 1 includes a system 59 for the aspiriation of the fumes which form inside the pallet 7 during the laser working. The system 59 includes an extractor 60, two ducts 61 arranged along a first side portion of the frame 11 and along a second side portion thereof opposite the first, each duct having three apertures, one for each shelf 12, and two tubes 63 connecting the ducts 61 to the extractor 60. Each pallet 7 also has an opening 64 in each side 21, each opening 64 facing a respective opening 62 when the pallet is positioned on a shelf 12.

With reference to Figures 1 and 2, the installation 1 finally includes two stations 65 for loading/unloading one pallet at a time, one station for the store 5 and one for the store 8. The stations 65 are arranged alongside the stores 5 and 8, adjacent the vertical members 16. Each station 65 includes a frame 66 for supporting a pallet 7; the frame 66 comprises two bars 67, parallel to each other and to the axis M, and a plurality of rails 68 connecting the bars 67. The wheels 27 of the pallet supported by the frame rest on the upper surfaces of the bars 67. The station 65 also includes means 71 for moving the frame 66 between a lower position and a position corresponding to one of the shelves 6; these means 71 are preferably constituted by fluid-dynamic actuators as shown in Figure 2.

With reference to Figure 1, the installation 1 finally includes an electronic central control unit 74 which controls the operation of all the members, devices and systems making up the installation 1. By means of a series of sensors 75, the control unit 74 is also operable to identify which shelves 6 and 12 of the stores 5 and 8 and of the frame 11 house a pallet 7, which shelves 6 and 12 are vacant at any time, which pallets 7 are in transit and their position along the assembly 4, and which pallets 7 hold sheets 2 to be worked and which pallets 7 hold already-worked sheets 2.

The installation 1 operates as follows.

If we suppose that on each of its shelves 6 the store 5 houses a pallet 7, each containing a sheet 2 to be worked, the device 13 is operable to collect a pallet 7 from one of the shelves 6 and to transfer it to the frame 11. In particular, once it has identified the pallet 7 to be collected and a corresponding shelf 6, the unit 74 controls the device 13 so that the frame 31 moves to the same level as the selected shelf 6. Once it has reached this level, the system 41 is activated in order to move the chain 42 (clockwise looking at Figure 6). As shown in Figure 1, each chain 42 is arranged in a space between the projections 8 of a corresponding pair of projections 28. When a pallet 7 is housed on the shelf 6, the movement of a portion 46, of the chains 42, adjacent the store 5, causes a first assembly of pins 53 to engage a notch 29. As the chains 42 continue to move, the first assembly of pins 53 draws the pallet 7 out of the shelf 6, moving it on its wheels 27 onto the frame 31. As the chains 42 continue to move, the second assembly of pins 53, still of the portion 46 of the chain, next to the store 5, engages the notch 30 on the rear side 22 of the pallet 7.

When the pallet 7 is completely on the frame 31, first the chains 42 are stopped and then the frame 31 is moved to a level corresponding to a chosen shelf 12 of the frame 11. It is now possible to continue moving the chains 42 in order to transfer the pallet 7 from the frame 31 to the selected shelf 12. During this move, first the first assembly of pins 53 and then the second assembly of pins 53 of the portion 46 of the chain, next to the frame 11, are disengaged from the notch 29 and the notch 30 respectively. The pallet is now fully resting on the shelf 12 of the frame 11.

In use, the first pallet 7 is placed on the highest shelf 12 and, as soon as the said pallet 7 is in position on the frame 11, the laser unit 57 of the machine 3 begins work on the sheet 2, work which consists in cutting parts of the sheet 2. During this work, the unit 57 is able to move along the axes X and Y under the action of the means 58a and 58b, and along the axis M thanks to movement of the cross member 55 under the action of the means 56. While the unit 57 is carrying out the aforesaid work, the device 13 collects one pallet 7 at a time placing them on the other shelves 12. Once work is finished on the sheet 2 on the pallet 7 resting on the top shelf 12, the device 13 removes the said pallet from the frame 11 and returns it to the store 5.

Following this transfer, the unit 57 is immediately able to begin work on the sheet 2 on the pallet 7 housed on the second shelf 12. Once this work is completed, the device 13 removes the pallet 7 from the second shelf 12 so that the unit 57 can begin work on the sheet 2 on the pallet 7 housed on the lower shelf 12. The operations described above in relation to the store 5 and the device 13 are repeated for the store 8 by the device 14.

It is clear that since the assembly 4 has two stores 5 and 8, with a plurality of shelves 6, and two devices 13 and 14 for collecting and transferring the pallets 7, it can carry out a large number of combinations for supplying the frame 11 with pallets 7 holding sheets 2 to be worked and for removing the pallets 7.

It should also be pointed out that the pallets 7 holding already worked sheets 2 can be moved to the store 5 and/or 8 and then exchanged, by the stations 65, for pallets holding sheets 2 to be worked. In particular, it is possible to move the frame 66 to the same level as a shelf 6, by the means 71, in order to withdraw a pallet 7 from this shelf 6 or to slide a pallet 7 onto the said shelf 6. In the embodiment of the assembly 4 shown here, the pallets 7 are removed from or placed on a shelf 6 by hand; it is clear, however, that such operations could also be carried out by devices entirely similar to the devices 13 and 14 described above. Finally, it should be noted that the machine 3 could have its own station, entirely separate from the device 13 and 14, for unloading from the frame 11 the pallets 7 holding already worked sheets 2, so that the stores 5 and 8 could be used only for supplying pallets 7 holding sheets 2 to be worked.

The fumes that are produced in the pallet 7 while the unit 57 is carrying out the work are evacuated from the pallet 7 by the system 59.

The above description shows that the present invention provides clear and numerous advantages.

In particular, the plant 1 includes an assembly 4 which automatically manages the operations involved in handling the sheets 2 to be worked and those which have been worked. The use of very capacious stores 5 and 8 means that the installation 1 is able to operate even with few personnel, such personnel possibly being used to unload and load the pallets 7 from and into the stores 5 and 8. In addition, the structure and the operating characteristics of the assembly 4 mean that the idle time of the machine 3 is reduced. While a sheet 2 is being worked, the assembly 4 prepares pallets 7 on the other shelves 12 of the of the frame 11. This means a considerable reduction in the processing costs of the sheet metal.

Lastly, it is clear that modifications and variations can be made to the plant 1 described and illustrated here without departing thereby from the scope of the present invention.

## Claims

1. An installation for working sheet metal which includes a machine tool (3) with a laser work unit (57) and an assembly (4) for storing a plurality of pallets (7) each supporting a metal sheet (2), characterised in that the said machine (3) includes a work frame (11) with at least two first shelves (12) arranged one above the other each for housing a respective said pallet (7), and in that the said assembly (4) includes a first store (5) with a plurality of second shelves (6) arranged one above the other and each housing a said pallet (7), and a first device (13) for transferring the said pallets (7) from the said first store (5) to the said work frame (11) and back again; the said work unit (57) being operable first to carry out the work on the said sheet (2) held in the said pallet (7) housed on the upper said first shelf (12) while the said first device (13) transfers a second pallet (7) to the lower said first shelf (12) and then, once the first pallet (7) has been removed from the said work frame (11), to carry out the work on the said sheet (2) held by the second said pallet (7).

2. An installation according to Claim 1, characterised in that the said first device (13) includes a frame (31) supporting a pallet (7), a first system for moving the said frame (31) along a vertical axis in order to move the said support frame (31) from a lower position into a load/unload position in which the said support frame (31) is at the same level as one of the said second shelves (6) of the said first store (5), and back again, and a second system (41) for collecting a pallet (7) from the said first store (5) in order to transfer said pallet (7) first to the support frame (31) and then to the work frame (11); the said second system (41) also being operable to collect the said pallet (7) from the said work frame (11) and return it to the said first store (5).

3. An installation according to Claim 2,characterised in that the said pallet (7) is box-shaped and has:
four sides lying in respective vertical planes, parallel to each other in pairs, two first parallel sides (21) being lateral and two second parallel sides (22) forming the front and the back respectively;
a base (23);
a plurality of first horizontal rails (24) which connect the said second sides (22),
a plurality of bodies (25) for each said first rail (24), each ending in a point at the top, the said sheet (2) resting on the tips of the said bodies (25) so as to form a cover over the said pallet (7);
rollers (27) supported by the said first parallel sides (21) and operable to enable the pallet (7) to slide on the shelves (6 and 12) and along the said support frame (31); and
two pairs of projections (28), from each of the said second sides (22), parallel to each other and each having two notches (29 and 30) adjacent to one another.

4. An installation according to Claim 3, characterised in that the said second system (41) includes two chains (42) supported by the said support frame (31) and each engaging a respective toothed wheel (47) which is rotated by an electric motor (52); the said chains (42) being narrower than the distance between the two projections (28) of each pair thereof so as to be able to pass between a said pair of projections (28), each of the said chains (42) supporting at least one respective pin (53) in separate portions operable to engage one of the said notches (29 and 30) in the said projections (28).

5. An installation according to Claim 4, characterised in that the distance between the said portions of the said chain (42) along which the latter supports the said pins (53) is substantially equal to the distance between a first notch (29) of the notches (29 and 30) in the said projections, which extend from the said rear second side (22).

6. An installation according to any preceding Claim, characterised in that the said first store (5) includes four vertical columns (15 and 16) and in that each of the said shelves (6) of the said first store (5) is constituted by two second horizontal rails (17) supported by the said vertical columns (15 and 16) and on which the said small rollers (27) engage.

7. An installation according to any one of the preceding Claims, characterised in that the said work frame (11) includes four columns (18) and in that each of the said shelves (12) of the said work frame (11) is constituted by two third horizontal rails (17) supported by the said columns (18) and on which the said rollers (27) engage.

8. An installation according to any preceding Claim, characterised in that it includes a second store (8) similar to the said main first store (5) and a second device (14), similar to the said device (13), for transferring the said pallets (7 from the said second store (8) to the said work frame (11) and back.

9. An installation according to Claim 8, characterised in that for each of the said stores (5 and 8) it includes a respective station (65) for loading and unloading the pallets (7).

10. An installation according to any preceding Claim, characterised in that the said machine (3) includes:
a base (54) arranged to the side of the said work frame (11);
a horizontal cross member (55) extending from the said base (54) along a first horizontal axis (Y) at a higher level than that of the said work frame (11);
means (56) for moving the cross member along a horizontal axis (M) orthogonal to the said first horizontal axis (Y);
the said laser work unit (57) being carried by the said cross member (55);
means (58a) for moving the said work unit (57) along the said first horizontal axis (Y); and
means (58b) for moving the said work unit (57) along a vertical axis (Z).

11. An installation according to any preceding Claim, characterised in that it includes a system (59) for evacuating the fumes which are produced in a said pallet (97) during the laser working.

12. An installation according to any preceding Claim, characterised in that it includes an electronic central control unit (4) which manages the operation of all the members, devices and systems making up the said plant; the said control unit (74) being able, by means of a series of sensors (75) to identify which of the said shelves (6 or 12) house a said pallet (7), which of the said shelves (6 and 12 are currently empty, which of the said pallets (7) are in transit and the position thereof along the assembly (4), and which of the said pallets (7) hold sheets (2) to be worked and which of said pallets (7) hold sheets (2) which have been worked.
